(19) **Europäisches Patentamt**

**European Patent Office**

**Office européen des brevets**

(11) **EP 0 885 267 B1**

(12) **EUROPEAN PATENT SPECIFICATION**

(45) Date of publication and mention
of the grant of the patent:
**12.01.2000 Bulletin 2000/02**

(51) Int Cl.7: **C09D 9/00**

(86) International application number:
**PCT/JP97/00544**

(21) Application number: **97905400.4**

(22) Date of filing: **26.02.1997**

(87) International publication number:
**WO 97/32937 (12.09.1997 Gazette 1997/39)**

(54) **RELEASANT FOR AQUEOUS POLYMER-TYPE FLOOR POLISH**

ABSTREIFER FÜR WÄSSRIGE, POLYMERE FUSSBODEN PFLEGEMITTEL

AGENTS ANTICOLLANTS POUR ENCAUSTIQUE DE PLANCHER DU TYPE POLYMER AQUEUX

(84) Designated Contracting States:
**AT BE CH DE DK ES FI FR GB GR IE IT LI LU NL PT SE**

(30) Priority: **07.03.1996 JP 8988596**

(43) Date of publication of application:
**23.12.1998 Bulletin 1998/52**

(73) Proprietor: **Johnson Company, Ltd.**
**Yokohama-shi, Kanagawa 231 (JP)**

(72) Inventor: **SADO, Mitsuo, Johnson Company, Ltd.**
**Naka-ku, Yokohama-shi, Kanagawa 231 (JP)**

(74) Representative: **Jones, Alan John et al**
**CARPMAELS & RANSFORD**
**43 Bloomsbury Square**
**London, WC1A 2RA (GB)**

(56) References cited:
**DE-C- 542 335          FR-A- 2 213 972**
**US-A- 5 454 985**

• **DATABASE WPI Week 8104 Derwent Publications Ltd., London, GB; AN 05135D XP002032853 "DETERGENT REMOVE PAINT METAL SURFACE" & SU 734 253 A (GETMANSKII) 18 May 1980**

Printed by Jouve, 75001 PARIS (FR)

**Description**

TECHNICAL FIELD

The present invention is directed to releasing agents and in particular to such a releasing agent which is highly capable of complete removal of a spent or wasted film from a floor surface coated with an aqueous polymer-type floor polish.

BACKGROUND ART

In general, floor polishes of an aqueous polymer type containing a synthetic resin as an effective component have been used as floor finishes for building structures.

Floor surfaces are lustrous and aesthetical when they have been just coated with an aqueous polymer-type floor polish. Such a floor surface thus finished, however, becomes unsightly with time since the floor polish film is exposed to users' scuff marks and dirt deposits, and this entails frequent washing of the floor surface. The floor surface washing is generally conducted such that a surface film layer of the aqueous polymer-type floor polish is removed or otherwise scraped together with the scuff marks and dirt deposits. Thus, those film portions which have been made dull due to dirt removal are repaired by coating with a fresh matrix of an aqueous polymer-type floor polish. Such surface washing and subsequent repair coating are effected usually at an interval of once or twice per month and continued as such over one or two years. In most instances, during this extended period of time, dirt gets progressively deposited over the surface film, which dirt could not be fully removed through each and every washing. This dirt deposition eventually renders the floor surface less aesthetic even by means of repetitive washing. When washing is found to be no longer effective, it is required that after the aqueous polymer-type floor polish film so wasted is wholly removed from the associated floor surface, an aqueous polymer-type floor polish should freshly be coated over the floor surface.

In order to completely remove a wasted floor polish film from a floor surface, a releasing agent is applied onto the film, followed by working with use of a polisher equipped with a floor pad. As releasants to this end, compositions have been commonly employed which are derived by intermixing a surfactant such as of a nonionic or anionic class, an alkaline substance such as sodium hydroxide, potassium hydroxide, sodium silicate, ammonia, an alkanolamine or the like, and a water-soluble ethylene glycol-type solvent such as ethylene glycol monobutyl ether, ethylene glycol monoethyl ether or the like, and subsequently by dissolving the resultant mixture with water.

In coping with a demand recently voiced for labor-saving floor cleaning, an aqueous polymer-type floor polish has been developed which is contrived to exhibit high durability and hence is made hard to be removed upon coating as a film over a floor surface. This type of floor polish leaves the problem that the resulting film when wasted is not fully removable from a floor surface only at one time and that tedious rinsing and wiping with water are necessary. A further impetus, therefore, has arisen to develop a releasing agent which would enable complete removal of a wasted floor polish film from a floor surface in a shortened period of time.

Water-soluble ethylene glycol type solvents have heretofore been used as releasants for the purpose discussed above. However, such a solvent is by nature volatile and moreover is liable to emit a malodor and also hazardous to the health of workers engaged in floor cleaning. As regards this class of solvent, certain restrictions have been placed on its application as stipulated by the Japan Labor Safety Hygiene Law, and the solvent has of late been subjected to a by far stricter acceptable level of amounts. In the United States of America in particular, a movement has been raised toward reducing organic compounds of a volatile nature from the viewpoint of environmental pollution. In fact, the California Air Resources Board, CA, has warned and categorized as volatile organic compounds those compounds having a vapor pressure of not lower than 0.1 mmHg at a temperature of 20°C. Because of their vapor pressures exceeding 0.1 mmHg at 20°C, most of the foregoing ethylene glycol type solvents fall within that category and hence would pose something problematic. Consequently, an urgent need exists for the development of a releasing agent having reduced volatility and enhanced performance.

DISCLOSURE OF INVENTION

With particular regard to the current state of the prior art, the present invention provides a releasing agent for use in removing an aqueous polymer-type floor polish which affords (1) easy removal of an aqueous polymer-type floor polish film, (2) simple rinse with water, and (3) least use of a volatile organic compound, immunity from offensive smell and safety.

More specifically, the invention provides a releasing agent for use in removing a wasted film of an aqueous polymer-type floor polish, which comprises as essential components

(A) 5 to 75% by weight of a water-soluble organic solvent represented by the formula

$$C_4H_9\text{-}O\text{-}(CH_2CH_2O)_nH$$

where n is an integer of 2 or 3,
(B) 15 to 40% by weight of benzyl alcohol, and
(C) 10 to 20% by weight of an amine compound.

DETAILED DESCRIPTION OF THE PREFERRED EMBODIMENTS

Water-soluble organic solvents, which are suited for use as component A in the present invention and having the following formula,

$$C_4H_9\text{-}O\text{-}(CH_2CH_2O)_nH$$

where n is an integer of 2 or 3, are chosen suitably from among diethylene glycol mono-n-butyl ether, diethylene glycol mono-iso-butyl ether, diethylene glycol mono-t-butyl ether, triethylene glycol mono-n-butyl ether and triethylene glycol mono-t-butyl ether. Particularly preferred amongst these solvents are diethylene glycol mono-n-butyl ether and triethylene glycol mono-n-butyl ether which are easily commercially available, highly capable of dissolving aqueous polymer-type floor polish films, rather low in vapor pressure and substantially odorless. It is to be noted here that the diethylene glycol mono-n-butyl ether shows a vapor pressure of 0.01 mmHg at 20°C and the triethylene glycol mono-n-butyl ether of lower than 0.01 mmHg at the same temperature.

The amount of the solvent or component A to be used is preferably in the range of 5 to 75% by weight, more preferably of 10 to 40% by weight, based on the total weight of a given releasant composition for use in the aqueous polymer-type floor polish (hereunder referred to simply as a "releasant composition"). Amounts of O or less than 5% by weight of the solvent fail to bring about acceptable releasing capabilities.

Component B or benzyl alcohol acts to effectively help the solvent or component A in dissolving an aqueous polymer-type floor polish film.

The benzyl alcohol ranges in amount from 15 to 40% by weight, preferably from 20 to 30% by weight of the total weight of the releasant composition. Below 15% by weight is ineffective for improving releasability of the releasant composition, whereas above 40% by weight involves undesirable separation of the resultant releasant solution, failing to produce a stable releasant product.

Component C or an amine compound also serves as an alkaline ingredient to aid the solvent in dissolving an aqueous polymer-type floor polish. Alkalis may be selected generally from inorganic alkalis such as sodium hydroxide, potassium hydroxide, sodium carbonate, potassium carbonate, sodium silicate and the like, and amines such as ammonia, ethanolamine, mono-iso-propanol-amine and the like. In the case of use of an inorganic alkali, however, sufficient rinsing and wiping should be done with use of water during releasing work so that the alkali is not left on a floor surface. Any residue of such alkali on the floor surface is prone to adversely affect an aqueous polymer-type floor polish to be subsequently applied thereover. Further, ammonia is not desired owing to its peculiar odor. As amine compounds for use in the present invention, alkanolamines are preferred among which monoethanolamine and monopropanolamine are the best choices for their least need for rinsing and wiping work.

The amount of the amine to be used is usually from 10 to 20% by weight based on the total weight of the releasant composition. Less than 10% by weight results in insufficient releasability, and conversely, more than 20% by weight should be avoided from a toxic standpoint of the amine.

The releasant composition according to the present invention can be prepared by admixing a water-soluble organic solvent, benzyl alcohol and an amine compound, all such components having been specifically noted above, together with optional additives such as nonionic surfactants, anionic surfactants, fluorine type surfactants, metal blocking agents, pigments, perfumes, defoamers and the like, and subsequently by dissolving the admixture in water. Such additives may be incorporated when they are found desirable with respect to the environment for normal working, the stability of releasant solutions and other conditions. Importantly, components A, B and C should be strictly observed in respect of their respective amounts specified hereinabove.

In order to remove a wasted film of an aqueous polymer-type floor polish from a floor surface, the releasant composition of the present invention can be dissolved in an amount of 100 parts by weight in 300 to 2,000 parts by weight of water to thereby prepare a dilute solution, followed by uniform coating of the solution over the floor surface by a mop and by subsequent disposal of the resultant soil or dirt water. Polishing may be followed in further enhancing releasability. Once the soil water is disposed, no or little alkali residue is left on the floor surface with the result that an ensuing film of an aqueous polymer-type floor polish is protected against any objectionable effect.

The present invention will now be described in greater detail with reference to the following examples which should be considered illustrative, but not restrictive. In these examples, all percentages are on a weight basis.

Examples 1 to 5

Different releasant compositions were prepared by use of diethylene glycol mono-n-butyl ether and triethylene glycol mono-n-butyl ether as water-soluble organic solvents, benzyl alcohol, and monoethanolamine as an amine compound along with small amounts of fatty acids, surfactants and sodium p-toluenesulfonate, and by further addition of water to the resulting mixtures. Each of the releasant compositions was formulated as listed in Table 1.

Comparative Example 1

The procedures for Examples 1 and 2 were followed except that 57.0% of ethylene glycol mono-n-butyl ether was used as a water-soluble organic solvent in place of 37.0% of each of the diethylene glycol mono-n-butyl ether and triethylene glycol mono-n-butyl ether and 20.0% of the benzyl alcohol.

Comparative Example 2

The procedures for Examples 3 and 4 were followed except that 37.0% of ethylene glycol mono-n-butyl ether was used as a water-soluble organic solvent in place of 15.0% of each of the diethylene glycol mono-n-butyl ether and triethylene glycol mono-n-butyl ether and 22.0% of the benzyl alcohol.

Table 1

|  | Ex.1 | Ex. 2 | Ex. 3 | Ex. 4 | Ex. 5 | Com. Ex. 1 | Com. Ex. 2 |
|---|---|---|---|---|---|---|---|
| diethylene glycol mono-n-butyl ether | 37.00 |  | 15.00 |  | 25.00 |  |  |
| triethylene glycol mono-n-butyl ether |  | 37.00 |  | 15.00 |  |  |  |
| benzyl alcohol | 20.00 | 20.00 | 22.00 | 22.00 | 25.00 |  |  |
| ethylene glycol mono-n-butyl ether |  |  |  |  |  | 57.00 | 37.00 |
| monoethanolamine | 14.00 | 14.00 | 15.00 | 15.00 | 12.00 | 14.00 | 15.00 |
| tall oil fatty acid | 0.75 | 0.75 |  |  |  | 0.75 |  |
| coconut oil fatty acid |  |  | 1.50 | 1.50 |  |  | 1.50 |
| caprylic acid |  |  |  |  | 3.00 |  |  |
| surfactant (Note 1) | 0.50 | 0.50 |  |  | 0.50 | 0.50 |  |
| surfactant (Note 2) | 0.10 | 0.10 | 0.10 | 0.10 | 0.10 | 0.10 | 0.10 |
| sodium p-toluene sulfonate |  |  | 1.60 | 1.60 |  |  | 1.60 |
| water | 27.65 | 27.65 | 44.80 | 44.80 | 34.40 | 27.65 | 44.80 |
| Total | 100.00 | 100.00 | 100.00 | 100.00 | 100.00 | 100.00 | 100.00 |

unit: wt. %
Note 1: Nonipol Soft SS-90, Sanyo Chemical Industries, Ltd.
Note 2: Fluorad FC-129, 3M Co.

Performance evaluation was made, under a set of conditions given below, of the releasant compositions obtained in Examples 1 to 5 and Comparative Examples 1 and 2.

[1] Preparation of Test Panel

An aqueous polymer-type floor polish formulated as shown in Table 2 was coated over a floor tile of a white homogeneous vinyl character (tradename: Matico S Plain, manufacturer: Toyo Linoleum Limited). This coating was performed with 10 strokes with a gauze in a coat weight of $10 \pm 2$ g/m$^2$ per stroke. The panel so treated was left to stand for 96 hours in a temperature constant chamber maintained at $80 \pm 2°C$ for 96 hours, whereby a test panel was provided.

Table 2

| Component | wt. % |
|---|---|
| acrylic emulsion (Note 1) | 35.00 |
| polyethylene oxide wax emulsion (Note 2) | 7.00 |
| tributoxyethyl phosphate | 1.25 |
| diethylene glycol monoethyl ether | 5.00 |
| alkali-soluble resin solution (Note 3) | 5.00 |
| surfactant (Note 4) | 0.02 |
| defoamer (Note 5) | 0.01 |
| water | 46.72 |
| Total | 100.00 |
| Note 1: Primal B-832, solid content 40% ROHM AND HAAS COMPANY<br>Note 2: Hytec E-4B, solid content 40% TOHO CHEMICAL INDUSTRY CO., LTD.<br>Note 3: Topco LR400 Resin solution, solid content 30% TOYO PETROLITE CO., LTD.<br>Note 4: Fluorad FC-129, 3M Co.<br>Note 5: Gardner Straight-Line SE-21 WACKER SILICONES CORP. | |

[II] Test Evaluation

The panels obtained above were each cut into a test piece with a size of 5 cm × 15 cm, and the test piece was checked as to its acceptability to release on a Gardner Straight-Line washability machine.

Release testing was carried out with use of a dilute releasant solution derived from dissolution of each releasant composition in a 5-fold amount of water. The dilute solution was coated in an amount of 2 ml over the test panel and left to stand for 2 minutes, followed by rubbing over the panel coat at a stroke of 10 with use of the above washability machine equipped with a polishing pad of a 5 cm × 10 cm size (manufacturer: 3M Co.). The panel thus treated was rinsed with water and thereafter dried.

Releasability was calculated from the following equation with the gloss value of a homogeneous style prior to coating with an aqueous polymer-type floor polish defined as $G_0$, with the gloss value of the test piece before release testing defined as $G_1$ and with the gloss value of the test piece after release testing defined as $G_2$.

$$\text{ratio of release (\%)} =$$

$$100 - (G_2 - G_0)/(G_1 - G_0) \times 100$$

The test results are shown in Table 3. The malodors of the releasant solutions were determined by organoleptic examination. No or least odor was graded to be "negative" and an emitted odor "positive".

Table 3

| | Example | | | | | Comparative Example | |
|---|---|---|---|---|---|---|---|
| | 1 | 2 | 3 | 4 | 5 | 1 | 2 |
| release ratio (%) | 100 | 93 | 98 | 94 | 100 | 81 | 15 |
| malodor | negative | negative | negative | negative | negative | positive | positive |

As evidenced from the results of Table 3, it has been found that the releasing agent of the present invention for use in removing an aqueous polymer-type floor polish is highly capable of efficient removal of a wasted film from a floor surface coated with such floor polish and moreover of safe release working with no emission of malodors. This ensures increased labor saving and improved work environment, thus contributing greatly to controlled cleaning for buildings.

## Claims

**1.** A releasing agent for use in removing an aqueous polymer-type floor polish, which comprises as essential components

(A) 5 to 75% by weight of a water-soluble organic solvent represented by the formula

$$C_4H_9\text{-}O\text{-}(CH_2CH_2O)_nH$$

where n is an integer of 2 or 3,
(B) 15 to 40% by weight of benzyl alcohol, and
(C) 10 to 20% by weight of an amine compound.

**2.** The releasing agent according to claim 1, wherein component (A) is one member selected from the group consisting of diethylene glycol mono-n-butyl ether and triethylene glycol mono-n-butyl ether.

**3.** The releasing agent according to claim 1, wherein component (C) is an alkanolamine.

## Patentansprüche

**1.** Trennmittel zur Verwendung beim Entfernen eines wässerigen Fußbodenpflegemittels vom Polymertyp, das als wesentliche Bestandteile umfaßt:

(A) 5 bis 75 Gew.-% eines wasserlöslichen organischen Lösungsmittels, dargestellt durch die Formel

$$C_4H_9\text{-}O\text{-}(CH_2CH_2O)_nH,$$

wobei n eine ganze Zahl von 2 oder 3 ist,
(B) 15 bis 40 Gew.-% Benzylalkohol und
(C) 10 bis 20 Gew.-% einer Aminverbindung.

**2.** Trennmittel nach Anspruch 1, wobei der Bestandteil (A) ein Mitglied ist, das aus der Gruppe, bestehend aus Diethylenglykol-mono-n-butylether und Triethylenglykol-mono-n-butylether, ausgewählt ist.

**3.** Trennmittel nach Anspruch 1, wobei der Bestandteil (C) ein Alkanolamin ist.

## Revendications

**1.** Agent décapant à utiliser pour retirer une encaustique pour le sol du type polymère aqueux, qui comprend, comme constituants essentiels:

(A) 5 à 75% en poids d'un solvant organique soluble dans l'eau représenté par la formule

$$C_4H_9\text{-}O\text{-}(CH_2CH_2O)_nH$$

dans laquelle n est un nombre entier de 2 ou 3,
(B) 15 à 40% en poids d'alcool benzylique, et
(C) 10 à 20% en poids d'un composé amine.

**2.** Agent décapant selon la revendication 1, dans lequel le constituant (A) est un élément choisi dans le groupe constitué par l'éther mono-n-butylique de diéthylèneglycol et l'éther mono-n-butylique de triéthylèneglycol.

3. Agent décapant selon la revendication 1, dans lequel le constituant (C) est une alcanolamine.